# EUROPEAN PATENT APPLICATION

(11) **EP 3 789 755 A1**
(43) Date of publication of application: **10.03.2021**
(21) Application number: 19195839.6
(22) Date of filing: 06.09.2019
(51) Int. Cl.: G01N 21/35, G01N 21/3504, G01M 15/10

(54) **MEASURING OF POLLUNTANTS EMITTED BY MOTOR VEHICLES USING A MULTISPECTRAL INFRARED CAMERA SYSTEM**

(71) Applicant: de la Fuente Egido, Josefina, 280015 Madrid (ES); Montero, Jose, 28015 Madrid (ES)
(72) Inventor: DE LA FUENTE EGIDO, Josefina, 28015 Madrid (ES)
(74) Representative: Lahidalga de Careaga, Jose Luis

(57) **Abstract**

This embodiment allows determining the pollutants emitted by motor vehicles by a combination of elements installed both at the road level and over it. This system comprises a main cabinet (1) placed at the road level incorporating a power supply module, a communications module and a computer system; upper cabinets (2) located above the road lanes comprise a multispectral infrared camera module (4), a cooling module (5), a power module (6), a communications module (7) and a module for extra requirements (8); and a black body (3) at the level of the road arranged in each of the lanes of the road. In addition the elements may be deployed at the side of the road making the system more compact.

## Description

### OBJECT OF THE INVENTION

The proposed system refers to an emissions remote detection system and to a methodology to detect exhaust emissions from motor vehicles where the system determines the components of the emitted vehicle exhaust by means of a disposition of elements incorporating multispectral infrared cameras.

### BACKGROUND

General remote detection systems are known. In general, the existing systems are used to detect emission data of a single vehicle travelling by a single traffic lane, such as an exit ramp in a road. That configuration limits the locations where the equipment can be used and it also limits the amount of vehicles that can be detected in a certain period of time.

As can be seen in US patent application US20130185001 which reveals a system and method for measuring the exhaust emissions of a motor vehicle in an uncontrolled emission test environment, the system comprises a toll collection structure that has a sensor to obtain information about a registered motor vehicle owner and about the motor vehicle itself, as the vehicle travels in a lane that passes through the structure. At least one emission detector, which is fixed to the toll collection structure, performs an emission test on the vehicle by analysing an exhaust plume emitted by the vehicle. Vehicle speed / acceleration is also measured. In various embodiments of the present document, the emission detector comprises a combination of dispersive or non-dispersive infrared detector and a dispersive or non-dispersive ultraviolet detector. The collected emission data are automatically compared to the emission standards and notified to the authority if the vehicle does not meet those standards. Various embodiments are described.

However, there are systems in the state of the art that allow pollutant measurements to be made for several vehicles and several lanes, as can be read in the document WO/2000/026641, where a system for remote vehicle emission detection is described in a multi-lane environment with a plurality of vehicle lanes, the system comprises: at least one source of radiation emitting a beam of radiation; at least one radiation detector to receive the radiation beam; and at least one processor to process at least the vehicle emission data obtained from at least one radiation detector, in which at least one processor determines which vehicle emission data obtained from the radiation detector are representative of the exhaust plume of a private vehicle. The system allows to detect concentrations of any of the following components such as N2, COx, NOx, 03, CxHy, as a result of the analysis that produces emission data; comparing those emission data with an emission standard established for that vehicle to determine if that vehicle complies with its standard; and update the electronic label of that vehicle with the result of that emission test.

One of the drawbacks of existing remote emission detection systems is that it is difficult to correctly associate each vehicle with its emission data when more than one vehicle is present. For example, if there are several vehicles at the detection site, the exhaust plume of each vehicle can contribute to emissions of the rest.

It is worth noting the US patent application US20090272181 that reveals a system to quantify the presence of one or more components in an exhaust plume of a vehicle traveling on a road, in which the vehicle emits a exhaust plume in a generally vertical direction, the system comprises: a collection structure that has one or more surfaces that direct the exhaust plume emitted by the vehicle to one or more openings of a collector disposed on the road surface; and a flow generator communicated with the collector that generates an air flow that extracts the exhaust emitted by the vehicle, generally in vertical direction, through one or more openings to a component detection system that quantifies the presence of one or more components in the exhaust plume emitted by the vehicle.

Finally, US application US 20130181836 discloses a system and a method for image-based determination of the concentration of CO and CO2 in the exhaust plume of a vehicle in an emission test environment. In one embodiment, the present method receives an IR image of the exhaust plume of a motor vehicle intended to be tested to determine the concentrations of CO and CO2. The IR image is captured using a mid-wave infrared camera with at least one optical filter tuned into the infrared absorption band of CO and CO2. Images are preprocessed to isolate the pixels that contain the exhaust plume. Pixel intensity values in these isolated regions are normalized and CO and CO2 concentrations are determined by a calibration curve that relates pixel intensities to concentrations. The concentrations are compared with an emission standard stablished for the vehicle to determine if the vehicle is a gross contaminant. The method comprises: receiving at least one IR image of an exhaust volume of a motor vehicle, that image shall be captured using an infrared medium-wave camera having at least one optical filter tuned into the infrared absorption band of any of: CO and CO2, each of those IR images comprises a matrix of pixels with intensity values obtained in that specific absorption band; and determine a concentration of any of CO and CO2 that exhaust volume using a calibration curve that relates pixel intensities to concentration levels.

The present invention proposes an arrangement of elements that allow the measurement of vehicle exhaust emissions by means of multispectral infrared cameras that can be located at the top of each lane or on the side of the road.

Multispectral infrared cameras are those that can collect images using different wavelengths simultaneously. This means that the images captured are not only limited to the spectrum of visible light (the one perceived by the human eye), but may be graduated to obtain different images according to the type of wave along the electromagnetic spectrum. These cameras make dynamic multispectral images at a high frame rate. Since the basis of operation is the capture of an environment image in a specific spectral range, it is not expected to require drastic changes in infrastructure. These types of cameras are a compact combination of the spectrograph and a matrix camera, which generates the multispectral image, what allows to solve colorimetric applications both industrial and scientific. In fact, if it were not for this type of cameras, there would be applications that could not be developed correctly due to the absence of visible light. In this way, with a multispectral image, a series of intensity values can be obtained in the wavelengths that the system captures. Versatility is another advantage, since they can be configured to work both from top to bottom, diagonal and even crossroad.

The capture of vehicle exhaust emission data requires very fast data acquisition under variable light conditions, which is not derived from the state of the art, being this one of the great advantages of the present invention.

### DESCRIPTION OF DRAWINGS

To complement the description that is being made and in order to help to better understand the characteristics of this invention, in accordance with the example of a preferred embodiment of it, and exemplary, not limiting, set of drawings is attached to such description. These drawings show the following:

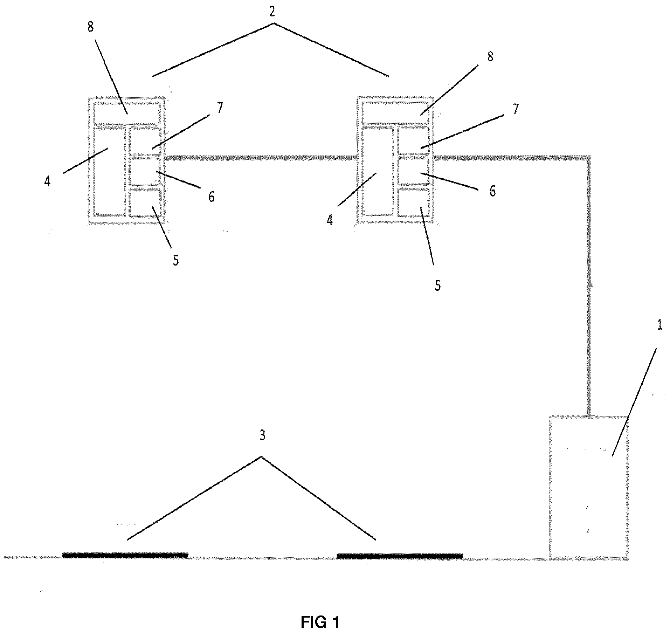

Figure 1.- shows a view of the measurement system of pollutants in motor vehicles according to the preferred embodiment of the invention for two-lane roads, where the cameras are placed above the road. More road lanes are also feasible just by copying the configuration of the lane beside.
Figure 2.- shows a view of the measurement system of pollutants in motor vehicles where the elements are arranged at the side of the road.

### BRIEF DESCRIPTION OF THE INVENTION

The proposed invention allows determining the pollutants emitted by motor vehicles by a combination of elements installed both at a road level and over it, the system comprises a main cabinet placed at the road level comprising a power supply, a communication module and a computer system; upper cabinets located above the road lanes comprising a multispectral infrared camera module, a cooling module, a power module, a communications module and a module for extra requirements; and a black body at the level of the road arranged in each of the lanes of the road, in addition the deployment could be both top-down and in a transversal way.

In a top-down implementation, the camera module can be installed at any point above the road level. The only consideration to keep in mind is that, depending on the characteristics of the road surface, a black body at the road level may be required to improve the vehicle's exhaust plume image captured by the camera. The top-down implementation can support several lanes, that is, one camera module per lane existing on the road.

### PREFERRED EMBODIMENT OF THE INVENTION

The measurement system of pollutants emitted by motor vehicles on roads or similar routes of the present invention allows the novelty of using multispectral infrared cameras in a non-controlled environment.

The system allows determining the pollutants emitted by motor vehicles by a combination of elements installed both at a road level and over it. The system comprises a main cabinet placed at the road level comprising a power supply, a communication module and a computer system; upper cabinets located above the road lanes comprising a multispectral infrared camera module, a cooling module, a power module, a communications module and a module for extra requirements; and a black body at the level of the road arranged in each of the lanes of the road

Each of the upper cabinets (2) located above the road lanes comprises a multispectral infrared camera module (4), a cooling module (5), a power module (6), a communications module (7) and a module for extra requirements (8). From the upper cabinets (2) the road is photographed using an optical system. The multispectral configuration is based on multispectral infrared cameras (4). The multispectral infrared camera (4) is installed directly at the top of each lane. They must be protected and only require power supply and communication from the main cabinet (1) located at the side of the road.

The multispectral infrared camera (4) located in each upper cabinet (2) will also be connected to the power supply, the communication module and the computer system.

It is important to keep each multispectral infrared camera (4) at a certain level of temperature and humidity, so the upper cabinet (2) has a cooling system to provide a good environment inside that upper cabinet (2) by means of a cooling module (5).

As for the detection technique, the multispectral technique is based on the analysis of the infrared spectral images.

The connection between the cabinets (1) and (2) will be made through power and communications wiring, for example, but not limited to, fibre for communications and power cable for energization.

Depending on the characteristics of the road surface, a black body (3) could be required at the road level located in each of the lanes in order to improve the vehicle's exhaust plume image captured by the multispectral infrared camera (4).

The black body (3) can be any material that allows contrast between the camera target (4) and the background. In this way, the species detected would be easily differentiated in the captured images.

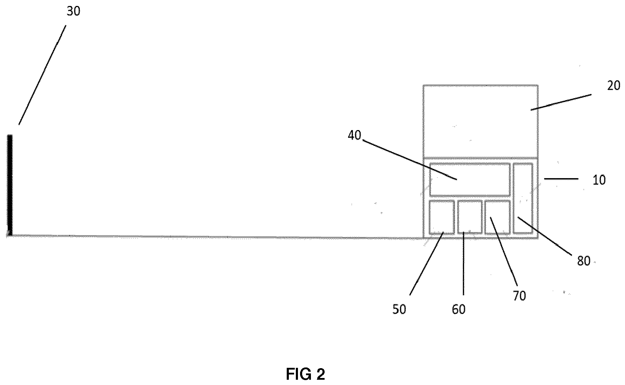

Alternatively, a different configuration is possible by arranging all the elements at the side of the road. Therefore, the whole system could be more compacted. In this last case the arrangement is as shown in Figure 2, where there is only one cabinet (10) at the side of the road, where the cabinet (10) comprises a module (20) with the main power supply, a communications module and the computer system; a multispectral infrared camera module (40); a cooling module (50); a power module (60); a communications module (70); and a module for extra requirements (80). In this alternative the black body (30) is arranged at one end of the horizontal road to the cabinet (10)

The entire system requires some triggers to function efficiently. These triggers may preferably be position or motion sensors that allow determining the presence of a vehicle. These triggers would be mainly of presence type to know, for example, when a car goes through a specific point to synchronize all devices and the system data flow.

Multispectral cameras require only what is called a black body at the opposite side. A black body could be the lane itself, a paint, component or special material that contrasts with the spectral image of the target species. Due to the large amount of materials and solutions in the market, it is not expected to require civil works on the road.

## Claims

1. Ameasuring system of pollutants emitted by motor vehicles in roads and similar routes where the measurement of pollutants are carried out by a multispectral infrared camera system, where the elements are arranged both at the road level and above it. The system comprises a main cabinet (1) placed at the road level that holds the main power supply, a communications module and the computer system; upper cabinets (2) located above the road lanes comprising a multispectral infrared camera module (4), a cooling module (5), a power module (6), a communications module (7) and a module for extra requirements (8); and a black body (3) at the road level arranged in each of the lanes of the road.

2. The system of claim 1 where the main cabinet (1) is connected to upper cabinets (2) arranged at the top of each lane of the road by means of both power and communications wires based, for example but not limited, on fibre.

3. The system of claim 1 where the multispectral infrared camera module (4) located in each upper cabinet (2) will also be connected to the power supply, the communication module and the computer system.

4. The system of claim 1 where the black body (3) can be a material that allows to have contrast between the target of the camera (4) and the background.

5. The system of claim 1 where the system also has triggers, preferably position or motion sensors.

6. The system of claim 1 where the connection between the cabinets (1) and (2) will be carried out through power and communications wiring, preferably fibre for communications and power cable for energizing.

7. A measuring system of pollutants emitted by motor vehicles in roads and similar routes, where the measurement of pollutants are carried out by a multispectral infrared cameras system, where the elements are arranged at the side of the road. The system comprises a cabinet (10) placed alongside of the road, that holds a module (20) that holds the main power supply, a communications module and the computer system; a multispectral infrared camera module (40); a cooling module (50); a power module (60); a communications module (70); and a module for extra requirements (80); and a black body (30) disposed at one end of the road and horizontal to the cabinet (10).
